# EUROPÄISCHE PATENTSCHRIFT

(11) **EP 3 594 017 B1**
(45) Veröffentlichungstag und Bekanntmachung des Hinweises auf die Patenterteilung: **26.08.2020**
(21) Anmeldenummer: 19178024.6
(22) Anmeldetag: 04.06.2019
(51) Int. Cl.: B60B 33/00, B65G 39/02

(54) **EINRICHTUNG UMFASSEND EINE LAUFROLLE UND EINE DIE LAUFROLLE TRAGENDE AUFHÄNGUNG**
DEVICE COMPRISING A CASTER AND A SUSPENSION CARRYING THE ROLLER
DISPOSITIF COMPRENANT UN GALET DE ROULEMENT ET UNE SUSPENSION PORTANT LE GALET DE ROULEMENT

(30) Priorität: 05.07.2018 AT 1992018
(43) Veröffentlichungstag der Anmeldung: 15.01.2020
(73) Patentinhaber: Faigle Kunststoffe GmbH, 6971 Hard (AT)
(72) Erfinder: Kienreich, Tobias, 6912 Hörbranz (AT)
(74) Vertreter: Hofmann, Ralf U.

(56) Entgegenhaltungen:
- WO-A2-2011/078468
- WO-A2-2015/121786
- US-A1- 2004 068 831

## Beschreibung

Die Erfindung bezieht sich auf eine Einrichtung umfassend eine um eine Drehachse drehbare Laufrolle für eine Förderanlage und eine die Laufrolle tragende Aufhängung, welche eine Gabel und einen Achsstift aufweist, der die Laufrolle durchsetzt und von der Gabel getragen ist.

Laufrollen für Förderanlagen kommen insbesondere bei Transportwagen für Regallager für Stückgut zum Einsatz. Solche flurgebundenen, schienengeführten Transportwagen werden auch als Shuttle oder Verschiebewagen bezeichnet. Zur Aufhängung einer solchen Laufrolle dient herkömmlicherweise eine aus Metall bestehende Gabel, welche die Laufrolle zwischen ihren Gabelarmen aufnimmt. Ein die Drehachse der Laufrolle ausbildender Achsstift aus Metall durchsetzt die Laufrolle und Öffnungen der Gabelarme und ist mit den Gabelarmen starr verbunden, beispielsweise durch Schraubverbindungen oder durch Verpressen.

Aus WO 2011/078468 A2 ist eine Laufrolle für eine Förderanlage bekannt. Aufgabe der Erfindung ist es eine vorteilhafte, einfach und vorzugsweise werkzeuglos montierbare Einrichtung der eingangs genannten Art bereitzustellen. Erfindungsgemäß gelingt dies durch die Merkmale des Anspruchs 1.

Bei der Einrichtung gemäß der Erfindung ist ein erstes und ein zweites Clipteil vorgesehen. Die Clipteile weisen jeweils eine Ausnehmung auf, in die jeweils ein Endabschnitt des Achsstifts ragt. Zum Verbinden mit der Gabel sind die Clipteile jeweils in eine rechtwinkelig zur Drehachse der Laufrolle stehende Einschubrichtung in eine jeweilige Einschubbahn der Gabel einschiebbar und mit der Gabel zusammenschnappbar.

Die Montage der Laufrolle an der Aufhängung kann somit vorteilhafterweise einfach durch Zusammenstecken und Verrasten der Teile erfolgen, ohne dass ein besonderes Montagewerkzeug erforderlich ist. Vorteilhafterweise ist auch eine einfache Demontage der Laufrolle von der Aufhängung möglich, z.B. um die Laufrolle auszutauschen, indem die Schnappverbindungen zwischen den Clipteilen und der Gabel gelöst werden.

Die Schnappverbindung zwischen dem jeweiligen Clipteil und der Gabel wird in einer vorteilhaften Ausführungsform durch eine elastisch auslenkbare Rastnase des Clipteils ausgebildet, welche in eine Rastausnehmung der Gabel einschnappt. Aber auch eine Anordnung der Rastnase am jeweiligen Gabelarm der Gabel und der Rastausnehmung am jeweiligen Clipteil ist denkbar und möglich.

Günstigerweise liegen die Einschubbahnen an den der Laufrolle zugewandten Innenseiten der Gabelarme und verlaufen in Längsrichtung der Gabelarme. Die Längsrichtung eines jeweiligen Gabelarms ist hierbei durch dessen Verlauf von seinem freien Ende in Richtung zum die beiden Gabelarme verbindenden Basisabschnitt der Gabel definiert.

Eine bevorzugte Ausführungsform der Erfindung sieht vor, dass zwischen dem jeweiligen Clipteil und dem jeweiligen Endabschnitt des Achsstifts jeweils ein Dämpfungsteil angeordnet ist. Das Material des Dämpfungsteils weist hierbei eine größere Elastizität als das des Achsstifts und der Gabel auf. Insbesondere umgibt ein hülsenförmiger Abschnitt des Dämpfungsteils den Achsstift und dieser hülsenförmige Abschnitt des Dämpfungsteils wird von einem hülsenförmigen Abschnitt des Clipteils umgeben.

Vorteilhafterweise wirkt das Dämpfungsteil nicht nur in radialer sondern auch in axialer Richtung. Hierzu kann das jeweilige Dämpfungsteil einen an einem Ende des hülsenförmigen Abschnitts von diesem nach außen abstehenden Ringbund aufweisen. Dieser liegt an einer Schulter des Achsstifts an, welche zwischen einem mittleren Abschnitt des Achsstifts und einem jeweiligen Endabschnitt des Achsstifts ausgebildet ist, welcher einen gegenüber dem mittleren Abschnitt kleineren Durchmesser aufweist. An der anderen Seite des Ringbundes liegt das zugeordnete

### Clipteil am Ringbund an.

Bei der erfindungsgemäßen Einrichtung bestehen vorteilhafterweise die Gabel und die Clipteile, vorzugsweise auch der Achsstift, aus Kunststoff. Besonders bevorzugt ist es, dass alle Teile der Aufhängung aus Kunststoff bestehen.

Weitere Vorteile und Einzelheiten der Erfindung werden im Folgenden anhand der beiliegenden Zeichnung erläutert. In dieser zeigen:
Fig. 1 einen Transportwagen einer Förderanlage mit in erfindungsgemäßer Weise aufgehängten Laufrollen;
Fig. 2 eine Schrägsicht einer erfindungsgemäßen Einrichtung;
Fig. 3 und 4 einen Vertikalschnitt und einen Horizontalschnitt durch die Drehachse;
Fig. 5 eine Explosionsdarstellung;
Fig. 6 bis 8 Darstellungen entsprechend den Fig. 2 bis 4 der Laufrolle mit dem eingesteckten Achsstift;
Fig. 9 bis 11 Darstellungen entsprechend Fig. 2 bis 4 mit zusätzlich aufgesteckten Dämpfungsteilen;
Fig. 12 bis 14 Darstellungen entsprechend Fig. 2 bis 4 mit zusätzlich aufgesteckten Clipteilen;
Fig. 15 bis 17 Darstellungen entsprechend den Fig. 2 bis 4, zusätzlich mit der Gabel, in der Position, in welcher die Clipteile in die Einschubbahnen der Gabel einschiebbar sind.

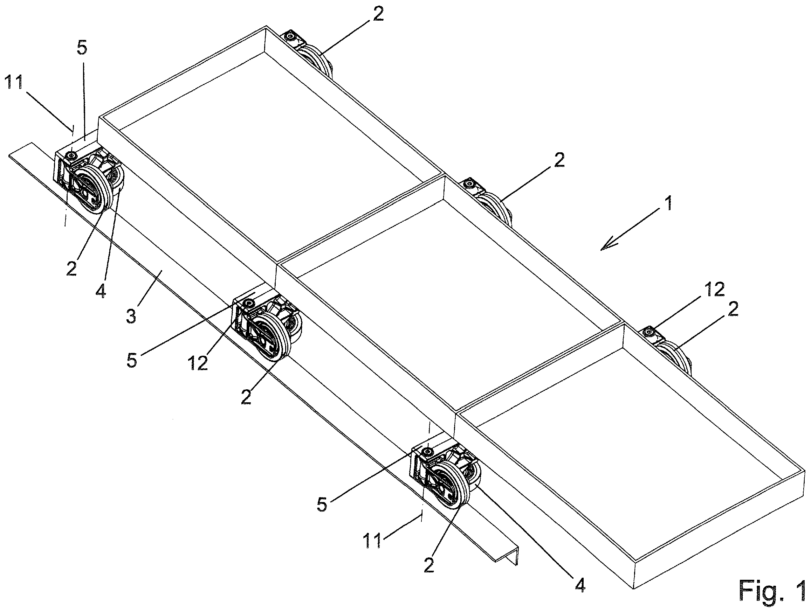

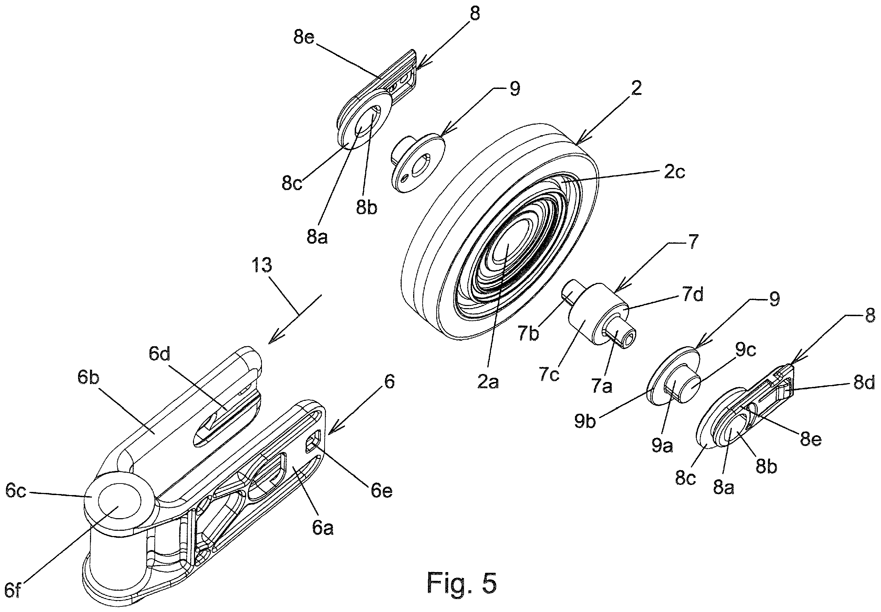

Ein Ausführungsbeispiel der Erfindung wird im Folgenden anhand der Fig. 1 bis 17 erläutert.

Fig. 1 zeigt einen Transportwagen 1, der mit in erfindungsgemäßer Weise aufgehängten Laufrollen 2 bestückt ist. Die Laufrollen 2 laufen auf von Schienen 3 gebildeten Laufbahnen ab. Die Ausrichtung der Laufrollen 2 gegenüber den Schienen 3 erfolgt mittels Führungsrollen 4, die mit seitlich an den Schienen 3 angeordneten Führungsflächen zusammenwirken, wie dies bekannt ist.

Die Laufrollen 2 sind mittels der Aufhängung mit Rahmenteilen 5 verbunden.

Die Aufhängung für eine jeweilige Laufrolle 2 weist eine Gabel 6 auf, welche einen ersten und einen zweiten Gabelarm 6a, 6b besitzt, die durch einen Basisabschnitt 6c der Gabel miteinander verbunden sind.

Die Laufrolle 2 ist durch einen in einer zentralen Öffnung 2a der Laufrolle 2 angeordneten Achsstift 7 im Zwischenraum zwischen den Gabelarmen 6a, 6b gehalten, wobei der Achsstift 7 in der im Weiteren beschriebenen Art und Weise mit den Gabelarmen 6a, 6b verbunden ist.

Im Ausführungsbeispiel wird die Öffnung 2a vom Innenring eines Kugellagers 2b der Laufrolle ausgebildet, auf dessen Außenring die Felge 2c angeordnet ist, auf der außen wiederum der Laufbelag 2d angeordnet ist.

Der Laufbelag 2d stellt eine Vollgummibereifung der Laufrolle 2 dar.

Die Längsmittelachse des Achsstifts 7 stellt somit die Drehachse 10 dar, um welche die Laufrolle 2 drehbar ist.

Der Achsstift 7 weist erste und zweite Endabschnitte 7a, 7b auf, welche in Ausnehmungen 8a von Clipteilen 8 ragen, wobei zwischen dem jeweiligen Endabschnitt 7a, 7b und dem jeweiligen Clipteil 8 ein jeweiliges Dämpfungsteil 9 liegt. Ein jeweiliges Dämpfungsteil 9 weist hierbei einen hülsenförmigen Abschnitt 9a auf, mit welchem es den jeweiligen Endabschnitt 7a des Achsstifts 7 umgibt und welcher in einem hülsenförmigen Abschnitt 8b des jeweiligen Clipteils aufgenommen ist.

Der Achsstift 7b weist vorteilhafterweise einen mittleren Abschnitt 7c auf, der einen gegenüber den Endabschnitten 7a, 7b größeren Durchmesser aufweist und auf dem die Laufrolle (im Ausführungsbeispiel mit dem Innenring ihres Kugellagers 2b) angeordnet ist. An der jeweiligen Schulter 7d zwischen dem mittleren Abschnitt 7c und dem jeweiligen Endabschnitt 7a, 7b liegt ein Ringbund 9b des jeweiligen Dämpfungsteils 9 an. Der Ringbund 9b stellt einen scheibenförmigen Abschnitt des Dämpfungsteils 9 dar, welcher vom der Laufrolle 2 zugewandten Rand des hülsenförmigen Abschnitts 9a des Dämpfungsteils 9 nach außen absteht. Am der Laufrolle 2 zugewandten Ende des hülsenförmigen Abschnitts 8b des jeweiligen Clipteils 8 steht ebenfalls ein Ringbund 8c nach außen ab, der einen scheibenförmigen Abschnitt des Clipteils 8 bildet und an der von der Laufrolle 2 abgewandten Seite des Ringbunds 9b des Dämpfungsteils 9 anliegt. Ein jeweiliges Dämpfungsteil 9 wirkt damit nicht nur in radialer sondern auch in axialer Richtung.

Die Gabelarme 6a, 6b der Gabel 6 weisen jeweils eine Einschubbahn 6d auf. Diese nimmt das jeweilige Clipteil 8 auf, wobei das Clipteil 8 durch eine Rastnase 8d, die in eine Rastausnehmung 6e der Gabel 6 eingreift, gegen eine Verschiebung in Längsrichtung der Einschubbahn 6d gesichert ist.

Die an der der Laufrolle 2 zugewandten Innenseite des jeweiligen Gabelarms 6a, 6b angeordnete Einschubbahn 6d verläuft in Längsrichtung des jeweiligen Gabelarms. Ein jeweiliges Clipteil 8 ist durch einen Führungsabschnitt 8e, der an den hülsenförmigen Abschnitt 8b des Clipteils 8 anschließt, gegenüber der Einschubbahn 6d verschiebbar geführt.

Der Führungsabschnitt 8e weist eine Längserstreckung auf, welche parallel zur Längserstreckung der Einschubbahn 6d liegt.

Die Einschubbahn 6d wird von einer nutförmigen Vertiefung des Gabelarms 6a, 6b gebildet. Vorteilhafterweise kann diese nutförmige Vertiefung hinterschnittene Seitenwände aufweisen, sodass der Führungsabschnitt 8e gegen ein Herausfallen aus der Einschubbahn 6d in alle Richtungen rechtwinkelig zur Einschubrichtung 13 gesichert ist. Der Führungsabschnitt 8e greift hierzu in den hinterschnittenen Bereich der Einschubbahn 6d ein.

Die Rastnase 8d ist am Führungsabschnitt 8e angeordnet und zwar in einem vom Verbindungsbereich des Führungsabschnitts 8e mit dem hülsenförmigen Abschnitt 8b abgelegenen Bereich.

Die Dämpfungsteile 9 weisen im Ausführungsbeispiel Endkappen 9c auf, welche die hülsenförmigen Abschnitte 9a auf der gegenüberliegenden Seite des Ringbunds 9b verschließen.

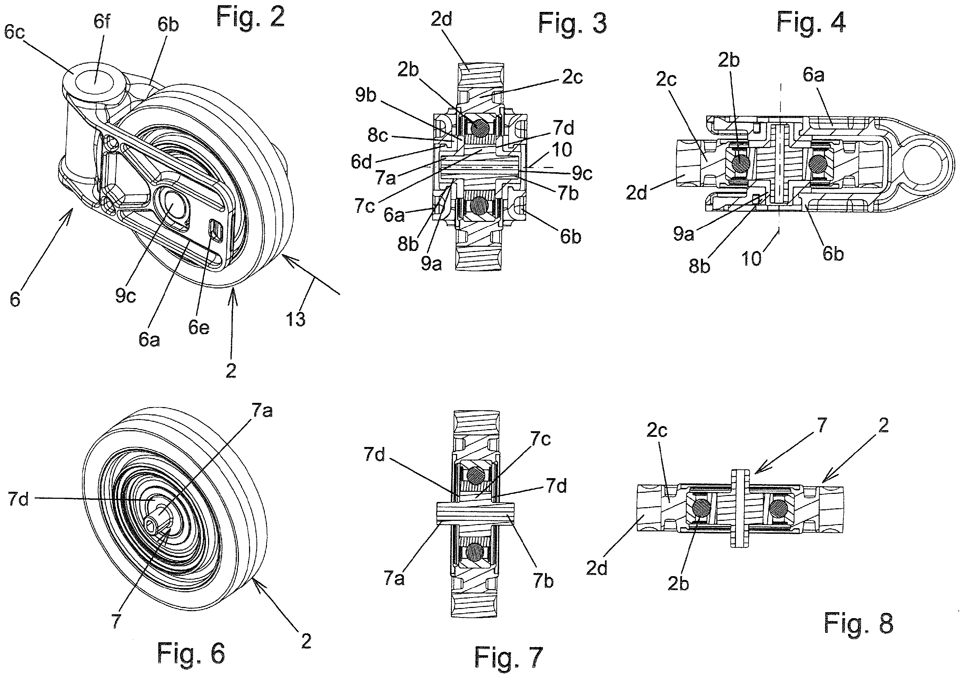

Zur Montage der Laufrolle 2 mit der die Laufrolle 2 drehbar lagernden Aufhängung wird zunächst der Achsstift 7 in die Öffnung 2a der Laufrolle 2 eingesteckt (in Richtung parallel zur Drehachse 10). Dieser Zustand ist in den Fig. 6 bis 8 ersichtlich.

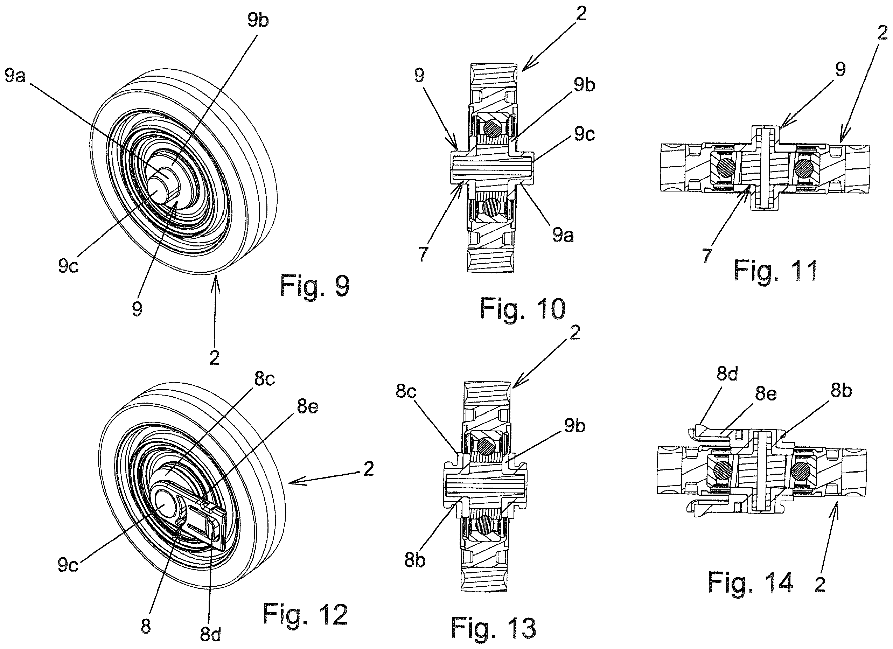

Im Weiteren werden die Dämpfungsteile 9 auf die Endabschnitte 7a, 7b des Achsstifts 7 aufgesteckt (in Richtung parallel zur Drehachse 10). Dieser Zustand ist in den Fig. 9 bis 11 dargestellt.

Im Weiteren werden die Clipteile 8 auf die Dämpfungsteile 9 aufgesteckt (in Richtung parallel zur Drehachse 10). Die hülsenförmigen Abschnitte 8b der Clipteile 8 umgeben damit die hülsenförmigen Abschnitte 9a der Dämpfungsteile 9, welche wiederum den Achsstift 7 umgeben. Im Weiteren liegt der Ringbund 9b des jeweiligen Dämpfungsteils 9 an der jeweiligen Schulter 7d des Achsstifts 7 an und auf der gegenüberliegenden Seite liegt am Ringbund 9b des jeweiligen Dämpfungsteils 9 der Ringbund 8c des jeweiligen Clipteils 8 an. Dieser Zustand ist in den Fig. 12 bis 14 dargestellt.

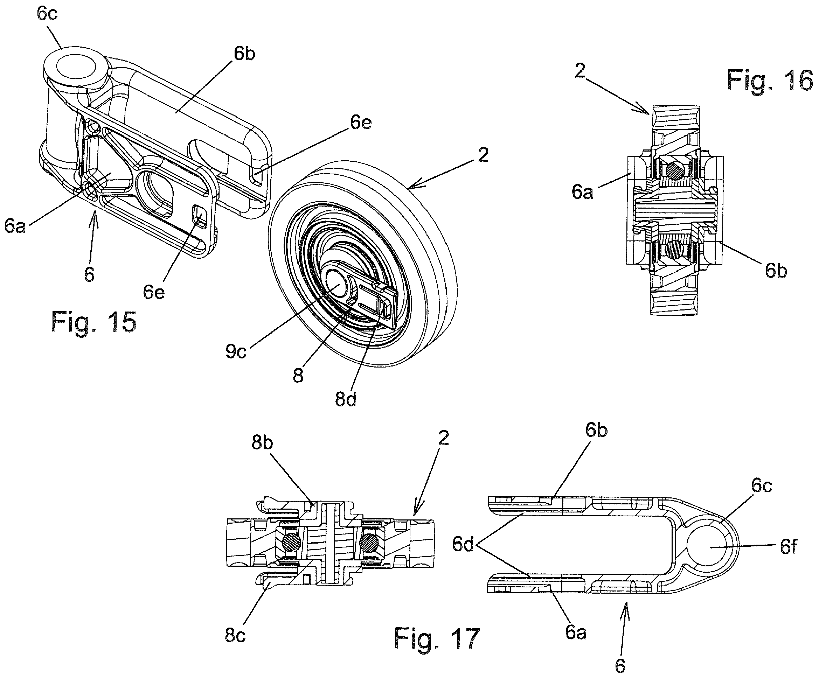

Die Laufrolle mit dem eingesteckten Achsstift 7 und den aufgesteckten Dämpfungsteilen 9 und Clipteilen 8 wird nunmehr vor dem Zwischenraum zwischen den Gabelarmen 6a, 6b positioniert, wie dies in den Fig. 15 bis 17 dargestellt ist. Im Weiteren wird die Laufrolle in den Zwischenraum zwischen den Gabelarmen 6a, 6b eingeschoben, wobei die Clipteile 8 mit ihren Führungsabschnitten 8e in die Einschubrichtung 13 in die Einschubbahnen 6d eingeschoben werden, bis die Rastnasen 8d der Clipteile 8 in die Rastausnehmungen 6e der Gabelarme 6a, 6b einschnappen. Die Einschubrichtung 13 steht rechtwinkelig zur Drehachse 10.

Vorteilhafterweise liegt die Einschubrichtung 13 parallel zur Richtung der Längserstreckung (=Längsrichtung) der Gabelarme 6a, 6b. Die Einschubrichtung 13 steht damit rechtwinkelig zur Schwenkachse 11.

Damit ist der in den Fig. 2 bis 4 dargestellte Zustand erreicht.

Die Rastausnehmungen 6e sind im Ausführungsbeispiel in Form von Fensteröffnungen in den Gabelarmen 6a, 6b ausgebildet. Soll die Laufrolle 2 von der Aufhängung wieder demontiert werden, so können die Rastnasen 8d durch diese Fensteröffnungen hindurch eingedrückt werden, bis sie außer Eingriff der Rastausnehmungen 6e gelangen, worauf die Clipteile 8 entlang der Einschubbahnen 6d von den Gabelarmen 6a, 6b abgezogen werden können.

Anstelle von Fensteröffnungen könnten die Rastausnehmungen 6e auch in Form von Vertiefungen ausgebildet sein, wobei dann zum außer Eingriff Bringen der Rastnasen 8d mit den Rastausnehmungen 6e die Führungsabschnitte 8e zusammengedrückt werden können.

Die Gabel 6 ist im Ausführungsbeispiel um eine vertikale Schwenkachse 11 gegenüber dem Rahmenteil 5, an dem sie gehalten ist, verschwenkbar. Hierzu weist der Basisabschnitt 6c eine Durchgangsöffnung 6f auf, welche von einem Gelenkbolzen 12 durchsetzt ist, der am Rahmenteil 5 befestigt ist.

Die Gabel 6 besteht vorzugsweise aus Kunststoff, beispielsweise PA. Der Kunststoff enthält günstigerweise Kohlefasern. Dadurch wird einer statischen Aufladung entgegengewirkt. Auch ein Gehalt von anderen elektrisch leitfähigen Fasern oder Partikeln und/oder eine elektrisch leitende Beschichtung könnte vorgesehen sein.

Die Clipteile 8 bestehen vorzugsweise aus Kunststoff, beispielsweise PA. Der Kunststoff enthält günstigerweise Kohlefasern. Dadurch wird einer statischen Aufladung entgegengewirkt. Auch ein Gehalt von anderen elektrisch leitfähigen Fasern oder Partikeln und/oder eine elektrisch leitende Beschichtung könnte vorgesehen sein.

Der Achsstift besteht vorzugsweise aus Kunststoff, beispielsweise PA. Der Kunststoff enthält günstigerweise Kohlefasern. Dadurch wird einer statischen Aufladung entgegengewirkt. Auch ein Gehalt von anderen elektrisch leitfähigen Fasern oder Partikeln und/oder eine elektrisch leitende Beschichtung könnte vorgesehen sein.

Die Dämpfungsteile 9 bestehen vorzugsweise aus einem thermoplastischen Elastomer (TPE), beispielsweise PU. Eine Ausbildung aus einem anderen elastomeren Material ist ebenfalls denkbar und möglich.

Durch die dem Achsstift und den Clipteilen 8 zwischengeschalteten Dämpfungsteile 9 wird ein ruhiger, vibrationsarmer Lauf erreicht. Grundsätzlich ist es auch denkbar und möglich, die Dämpfungsteile 9 wegzulassen. Die Clipteile 8 werden dann direkt auf die Endabschnitte 7a, 7b des Achsstifts 7 aufgesteckt und die Endabschnitte 7a, 7b des Achsstifts 7 werden direkt (und nicht unter Zwischenschaltung der Dämpfungsteile 9) von den Clipteilen 8 gehalten.

Auch eine Ausbildung mit rechtwinkelig zur Längsrichtung der Gabelarme 6a, 6b sich erstreckenden Einschubbahnen, sodass also die Einschubrichtung 13 rechtwinkelig zur Richtung der Längserstreckung der Gabelarme 6a, 6b steht, ist denkbar und möglich.

Durch die Erfindung können Kosten für die Herstellung und/oder Montage eingespart werden.

Die erfindungsgemäße Einrichtung zeichnet sich auch durch ein geringes Gewicht aus.

Wie beschrieben, kann die Erfindung insbesondere bei flurgebundenen, schienengeführten Transportwagen von Förderanlagen für Regallager für Stückgut eingesetzt werden. Aber auch ein Einsatz im Zusammenhang mit anderen Laufrollen, insbesondere solchen mit Vollgummibereifung, ist denkbar und möglich.

**Legende zu den Hinweisziffern:**

| | | | |
|---|---|---|---|
| 1 | Transportwagen | 9a | hülsenförmiger Abschnitt |
| 2 | Laufrolle | 9b | Ringbund |
| 2a | Öffnung | 9c | Endkappe |
| 2b | Kugellager | 10 | Drehachse |
| 2c | Felge | 11 | Schwenkachse |
| 2d | Laufbelag | 12 | Gelenkbolzen |
| 3 | Schiene | 13 | Einschubrichtung |
| 4 | Führungsrolle | | |
| 5 | Rahmenteil | | |
| 6 | Gabel | | |
| 6a | Gabelarm | | |
| 6b | Gabelarm | | |
| 6c | Basisabschnitt | | |
| 6d | Einschubbahn | | |
| 6e | Rastausnehmung | | |
| 6f | Durchgangsöffnung | | |
| 7 | Achsstift | | |
| 7a | Endabschnitt | | |
| 7b | Endabschnitt | | |
| 7c | mittlerer Abschnitt | | |
| 7d | Schulter | | |
| 8 | Clipteil | | |
| 8a | Ausnehmung | | |
| 8b | hülsenförmiger Abschnitt | | |
| 8c | Ringbund | | |
| 8d | Rastnase | | |
| 8e | Führungsabschnitt | | |
| 9 | Dämpfungsteil | | |

## Patentansprüche

1. Einrichtung umfassend eine um eine Drehachse (10) drehbare Laufrolle (2) für eine Förderanlage und eine die Laufrolle (2) tragende Aufhängung, welche eine Gabel (6) und einen Achsstift (7) aufweist, der die Laufrolle (2) durchsetzt und von der Gabel (6) getragen ist, **dadurch gekennzeichnet, dass** die Aufhängung im Weiteren ein erstes und ein zweites Clipteil (8) aufweist, welche jeweils eine Ausnehmung (8a) aufweisen, in die ein jeweiliger Endabschnitt (7a, 7b) des Achsstifts (7) ragt und welche zum Verbinden mit der Gabel (6) jeweils in eine rechtwinkelig zur Drehachse (10) liegende Einschubrichtung (13) in eine jeweilige Einschubbahn (6d) der Gabel (6) einschiebbar und mit der Gabel (6) zusammenschnappbar sind.

2. Einrichtung nach Anspruch 1, **dadurch gekennzeichnet, dass** die Einschubbahnen (6d) an den der Laufrolle (2) zugewandten Innenseiten von beidseitig der Laufrolle (2) liegenden Gabelarmen (6a, 6b) der Gabel (6) angeordnet sind.

3. Einrichtung nach Anspruch 1 oder 2, **dadurch gekennzeichnet, dass** die Einschubbahnen (6d) in Längsrichtung der Gabelarme (6a, 6b) verlaufen.

4. Einrichtung nach einem der Ansprüche 1 bis 3, **dadurch gekennzeichnet, dass** die Gabelarme (6a, 6b) durch einen Basisabschnitt (6c) miteinander verbunden sind, der eine Durchgangsöffnung (6f) zum Durchtritt eines Gelenkbolzens (12) aufweist.

5. Einrichtung nach einem der Ansprüche 1 bis 4, **dadurch gekennzeichnet, dass** zwischen dem jeweiligen Clipteil (8) und dem jeweiligen Endabschnitt (7a, 7b) des Achsstifts (7) jeweils ein Dämpfungsteil (9) angeordnet ist.

6. Einrichtung nach Anspruch 5, **dadurch gekennzeichnet, dass** ein hülsenförmiger Abschnitt (9a) des Dämpfungsteils (9) den Achsstift (7) umgibt und von einem hülsenförmigen Abschnitt (8b) des Clipteils (8) umgeben wird.

7. Einrichtung nach einem der Ansprüche 1 bis 6, **dadurch gekennzeichnet, dass** die Endabschnitte (7a, 7b) des Achsstifts (7) einen kleineren Durchmesser als ein mittlerer Abschnitt (7c) des Achsstifts (7) aufweisen und ein vom hülsenförmigen Abschnitt (9a) des jeweiligen Dämpfungsteils (9) abstehender Ringbund (9b) des Dämpfungsteils (9) an der jeweiligen Schulter (7d) zwischen dem mittleren Abschnitt (7c) und dem jeweiligen Endabschnitt (7a, 7b) des Achsstifts (7) anliegt.

8. Einrichtung nach Anspruch 6 oder nach Anspruch 7, wenn abhängig von Anspruch 6, **dadurch gekennzeichnet, dass** an den hülsenförmigen Abschnitt (8b) eines jeweiligen Clipteils (8) ein Führungsabschnitt (8e) anschließt, der von der jeweiligen Einschubbahn (6d) der Gabel (6) verschiebbar geführt ist.

9. Einrichtung nach einem der Ansprüche 1 bis 8, **dadurch gekennzeichnet, dass** die Gabel (6) und die Clipteile (8) aus Kunststoff bestehen.

10. Einrichtung nach einem der Ansprüche 1 bis 9, **dadurch gekennzeichnet, dass** der Achsstift (7) aus Kunststoff besteht.

## Claims

1. A device comprising a running roller (2) for a conveyor system, which roller can be rotated about a rotational axis (10), and a suspension system which supports the running roller (2) and has a fork (6) and an axle pin (7) which penetrates the running roller (2) and is supported by the fork (6), **characterized in that** the suspension system further comprises a first and a second clip part (8) which each have a recess (8a), into which a respective end section (7a, 7b) of the axle pin (7) protrudes and which, for connection to the fork (6), each can be pushed in a push-in direction (13) which lies at a right angle with respect to the rotational axis (10) into a respective push-in track (6d) of the fork (6) and can be snapped together with the fork (6).

2. The device as claimed in claim 1, **characterized in that** the push-in tracks (6d) are arranged on the inner sides, facing the running roller (2), of fork arms (6a, 6b) of the fork (6) which lie on both sides of the running roller (2).

3. The device as claimed in claim 1 or 2, **characterized in that** the push-in tracks (6d) run in the longitudinal direction of the fork arms (6a, 6b).

4. The device as claimed in one of claims 1 to 3, **characterized in that** the fork arms (6a, 6b) are connected to one another by way of a base section (6c) which has a through opening (6f) for the passage of a joint pin (12).

5. The device as claimed in one of claims 1 to 4, **characterized in that** in each case a damping part (9) is arranged between the respective clip part (8) and the respective end section (7a, 7b) of the axle pin (7).

6. The device as claimed in claim 5, **characterized in that** a sleeve-shaped section (9a) of the damping part (9) surrounds the axle pin (7) and is surrounded by a sleeve-shaped section (8b) of the clip part (8).

7. The device as claimed in one of claims 1 to 6, **characterized in that** the end sections (7a, 7b) of the axle pin (7) have a smaller diameter than a middle section (7c) of the axle pin (7), and an annular collar (9b) of the damping part (9), which annular collar (9b) projects from the sleeve-shaped section (9a) of the respective damping part (9), bears against the respective shoulder (7d) between the middle section (7c) and the respective end section (7a, 7b) of the axle pin (7).

8. The device as claimed in claim 6 or in claim 7, if dependent from claim 6, **characterized in that** the sleeve-shaped section (8b) of a respective clip part (8) is adjoined by a guide section (8e) which is guided displaceably by the respective push-in track (6d) of the fork (6).

9. The device as claimed in one of claims 1 to 8, **characterized in that** the fork (6) and the clip parts (8) consist of plastic.

10. The device as claimed in one of claims 1 to 9, **characterized in that** the axle pin (7) consists of plastic.

## Revendications

1. Dispositif comprenant une roulette (2) pour un dispositif de convoyage, laquelle roulette peut tourner autour d'un axe de rotation (10), et une suspension qui supporte la roulette (2) et qui est munie d'une fourche (6) et d'un axe (7) qui traverse la roulette (2) et qui est supporté par la fourche (6), **caractérisé en ce que** la suspension est munie en outre d'une première et d'une deuxième pièce de clip (8) qui sont munis chacun d'un évidement (8a) dans lequel pénètre une section d'extrémité (7a, 7b) correspondante de l'axe (7) et qui, pour être reliés à la fourche (6), peuvent être insérés chacun dans une voie d'insertion (6d) de la fourche (6) dans une direction d'insertion (13) perpendiculaire à l'axe de rotation (10), et peuvent être encliquetés avec la fourche (6).

2. Dispositif selon la revendication 1, **caractérisé en ce que** les voies d'insertion (6d) sont disposées sur les faces intérieures, dirigées vers la roulette (2) de branches de fourche (6a, 6b) de la fourche (6) qui sont disposées de part et d'autre de la roulette (2).

3. Dispositif selon la revendication 1 ou 2, **caractérisé en ce que** les voies d'insertion (6d) s'étendent en direction longitudinale des branches de fourche (6a, 6b).

4. Dispositif selon l'une des revendications 1 à 3, **caractérisé en ce que** les branches de fourche (6a, 6b) sont reliées entre elles par une section de base (6c) ayant une ouverture traversante (6f) pour laisser passer un axe de pivot (12).

5. Dispositif selon l'une des revendications 1 à 4, **caractérisé en ce qu'**une pièce d'amortissement (9) est disposée entre chaque pièce de clip (8) et la section d'extrémité correspondante (7a, 7b) de l'axe (7).

6. Dispositif selon la revendication 5, **caractérisé en ce qu'**une section en forme de manchon (9a) de la pièce d'amortissement (9) entoure l'axe (7) et est entourée par une section en forme de manchon (8b) de la pièce de clip (8).

7. Dispositif selon l'une des revendications 1 à 6, **caractérisé en ce que** les sections d'extrémité (7a, 7b) de l'axe (7) ont un diamètre inférieur à une section centrale (7c) de l'axe (7), et une collerette annulaire (9b) de la pièce d'amortissement (9), qui dépasse et qui saille de la section en forme de manchon (9a) de la pièce d'amortissement (9) correspondante, est en appui contre l'épaulement (7d) correspondant située entre la section centrale (7c) et la section d'extrémité correspondante (7a, 7b) de l'axe (7).

8. Dispositif selon la revendication 6 ou selon la revendication 7, quand elle dépend de la revendication 6, **caractérisé en ce que** la section en forme de manchon (8b) de la pièce de clip correspondante (8) se poursuit par une section de guidage (8e) qui est guidée de manière coulissante par la voie d'insertion correspondante (6d) de la fourche (6).

9. Dispositif selon l'une des revendications 1 à 8, **caractérisé en ce que** la fourche (6) et les pièces de clip (8) sont en matière plastique.

10. Dispositif selon l'une des revendications 1 à 9, **caractérisé en ce que** l'axe (7) est en matière plastique.
